# EUROPEAN PATENT SPECIFICATION

(11) **EP 2 184 319 B1**
(45) Date of publication and mention of the grant of the patent: **20.04.2011**
(21) Application number: 08168511.7
(22) Date of filing: 06.11.2008
(51) Int. Cl.: C08L 23/00

(54) **Process for the production of organic polymeric profiles**
Verfahren zur Herstellung von organischen polymerischen Profilen
Procédé de production de profils polymériques organiques

(43) Date of publication of application: 12.05.2010
(73) Proprietor: Clariant Finance (BVI) Limited, Road Town, Tortola (VG)
(72) Inventor: Kolditz, Pirko, 22145 Hamburg (DE); Hohner, Gerd Dr., 86368 Gersthofen (DE)
(74) Representative: Hütter, Klaus

(56) References cited:
- EP-A- 0 735 092
- WO-A-2008/037398

## Description

The invention relates to the use of three components in the joint extrusion with an organic polymer OP in order to facilitate higher throughput in the production of polymeric articles and profiles in extruders; the first component being a propylene-olefin-copolymer wax; the second component being a montan wax, an amide wax or a polyolefin homopolymer wax, and the third component being a metal salt of a C₁₀₋₂₀ fatty acid; the three components can also be used in form of a composition, the composition being in the form of a masterbatch or of a compound.

In the plastics industry it is customary to use additives in the form of compounds or masterbatches. For the purpose of this invention, polymer means organic polymer, and articles and profiles are articles and profiles made of an organic polymer, i.e. polymeric articles and polymeric profiles.

For the purposes of the invention, masterbatches are compositions comprising a carrier polymer and the additive, with the additive being present in the masterbatch in higher concentrations than in the final application, and the carrier polymer often not being the organic polymer of the final application. Preferred concentrations of the additives in a masterbatch range of from 0.1 to 90% by weight, more preferably of from 1 to 80% by weight, even more preferably of from 6 to 80% by weight, the % by weight each time based on the total weight of the masterbatch.

For the purposes of the invention, compounds are compositions comprising a polymer and the additive, wherein the additive being present in the compound in the desired final concentration of the final application or final article, and the polymer is the desired polymer of the final application or final article, so that the compound is merely brought to the desired shape of the final application or final article by means of a physical shaping process.

Compositions in form of masterbatches and/or compounds, which are used to elevate throughput in the production of polymers, articles or profiles by extrusion, the polymers, the profiles or the articles being modified with additives, have to satisfy demanding requirements: The compositions should have a low viscosity in order to give a good processability, i.e. they should provide for low pressure and low torque in the extruder, the compositions should further have a high loading of the additive, i.e. a high concentration of the additive, which is characterized in % by weight of the additive, the % by weight based on the weight of the total composition, if not otherwise stated. Further requirements are in the case of a masterbatch good miscibility and compatibility with the polymer of the final application, the final article or final profile, further a good dispersion of the additive in the masterbatch and/or in the compound, very small adverse effects on the mechanical and thermal properties of the final article or final profile, in particular in respect of impact strength, tensile strength or heat distortion resistance.

EP 1 010 728 A discloses wax preparations comprising montan waxes, esters of polyols and soaps of montan waxes.

The known compositions and the known processes do not satisfy all present-day requirements of industry, as have been mentioned above. There is a need for an improved process for the production of profiles or articles which satisfy present-day requirements and, in particular, make the required viscosity, loading and throughput possible and available during the extrusion of polymers.

The use of masterbatches comprising specific metallocene polypropylene wax, a further wax and a metal soap of a fatty acid surprisingly provide for improved process characteristics.

Subject of the invention is the use of a combination of a component A, a component D and a component F, for the joint extrusion together with an organic polymer OP in the production of a profile or an article made of a processed organic polymer;
wherein
the component A is a propylene-olefin-copolymer wax;
the component D is a wax selected from the group consisting of
montan waxes,
amide waxes and
homopolymeric polyolefin waxes;
the component F being a metal salt of a C₁₀₋₂₀ -fatty acid;
with the propylene-olefin-copolymer wax being made of the monomers propylene and of from 0.1 to 50% by weight of at least one compound of formula (II), 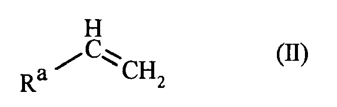 with R^{a} being selected from the group consisting of H and of unbranched or branched C₂₋₁₈ alkyl;
with the % by weight being based on the total weight of the monomers.

Further subject of the invention is a process for the production of a profile or an article made of a processed organic polymer, characterized by an extrusion step wherein an organic polymer OP is jointly extruded together with a component A, a component D and a component F, wherein the
component A is a propylene-olefin-copolymer wax;
the component D is a wax selected from the group consisting of
montan waxes,
amide waxes and
homopolymeric polyolefin waxes;
the component F being a metal salt of a C₁₀₋₂₀ -fatty acid;
with the propylene-olefin-copolymer wax being made of the monomers propylene and of from 0.1 to 50% by weight of at least one compound of formula (II), 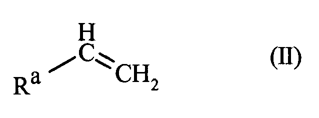 with R^{a} being selected from the group consisting of H and of unbranched or branched C₂₋₁₈ alkyl;
with the % by weight being based on the total weight of the monomers.

Within the meaning of the invention, the profile or the article may of course also be made of more than one processed organic polymer, in this case the respective organic polymers OP are jointly extruded with the components A, D and F.

Preferably, the propylene-olefin-copolymer wax is made of propylene and of from 0.1 to 50% by weight, more preferably of from 1 to 40% by weight, even more preferably of from 2 to 30% by weight, especially of from 2 to 20% by weight, with the % by weight being based in each case on the total weight (100%) of the monomers, of at least one, preferably of 1, 2 or 3, more preferably of 1, compound of formula (II). Preferably, R^{a} is selected from the group consisting of H and of unbranched or branched C₂₋₄ alkyl.

More preferably, R^{a} is H, i.e. the propylene-olefin-copolymer wax is a propylene-ethylene-copolymer wax.

Therefore, the combined amounts of the monomers propylene and of the compound of formula (II) add up to 100 % by weight, with the % by weight being based in each case on the total weight (100%) of the monomers.

Preferably, the component A, D and F are jointly extruded with the organic polymer OP in form of a composition Z, the composition Z comprising a component A, a component D and a component F.

The composition Z is preferably a masterbatch MB or a compound CO.

Further, the propylene-olefin-copolymer waxes are preferably characterized by a narrower molar mass distribution in comparison to conventional waxes. The molar mass distribution is characterized by the mass average molar mass (Mw value [g/mol]) and the number average molar mass (Mn value [g/mol]).

Preferably, Mn is of from 500 to 50 000 g/mol, more preferably of from 1000 to 35 000 g/mol, even more preferably of from 1100 to 25 000 g/mol.

Preferably, Mw is of from 1000 to 14 0000 g/mol, more preferably of from 1900 to 100 000 g/mol, even more preferably of from 2100 to 70 000 g/mol.

Preferably, Mw divided by Mn, in the following called the Mw/Mn value, is of from 1.0 to 3.0, more preferably of from 1.5 to 2.9, even more preferably of from 1.7 to 2.8; especially of from 2.1 to 2.7; more especially of from 2.2 to 2.5; whereas in case of conventional, non-metallocene catalyzed waxes, the Mw/Mn value is at least 3.1 and can go up to 7 or 8.

Possible catalysts, which can be used for the production of the propylene-olefin-copolymer waxes, are preferably Ziegler-Natta-catalysts and metallocene catalysts, e.g. those mentioned in Ullmann's Encyclopedia of Industrial Chemistry, Vol. A 28, Weinheim 1996, S. 151-152.

Propylene-olefin-copolymer waxes, preferably propylene-ethylen-copolymer waxes, can also be manufactured by thermal degradation of suitable high molecular weight propylene-olefin copolymers, preferably propylene-ethylene copolymers.

Preferably, propylene-olefin-copolymer waxes are waxes which have been prepared in the presence of metallocenes as catalyst. The special abilities of metallocene catalysts are used to synthesize new propylene-olefin-copolymer waxes with selective and completely new property profiles. The use of metallocene catalysts provides for special combinations of melting point, viscosity and molecular weight of a propylene-olefin-copolymer wax.

The propylene-olefin-copolymer waxes, preferably the metallocene propylene-olefin-copolymer waxes, are preferably largely or completely amorphous and can additionally be modified so as to make them polar if required. For the purposes of the invention, largely means more than 80% by weight, preferably more than 90% by weight, in particular more than 95% by weight, especially more than 99% by weight, the % by weight in each case based on the total weight of the wax.

The metallocene propylene-olefin-copolymer waxes are prepared using metallocene compounds of the formula (I).

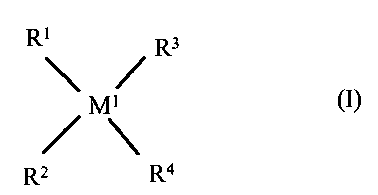

This formula encompasses compounds of the formula (Ia), 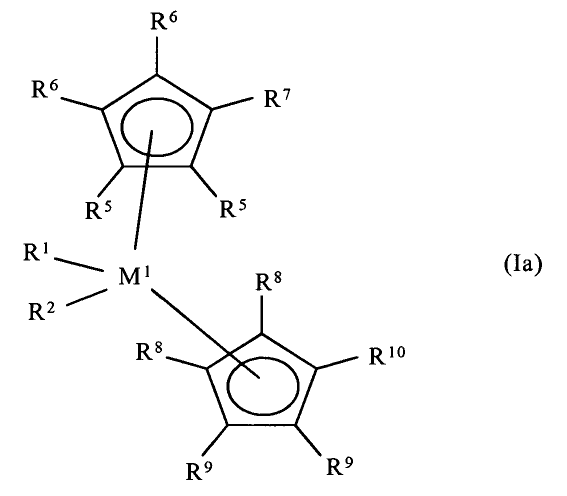 the formula (Ib) 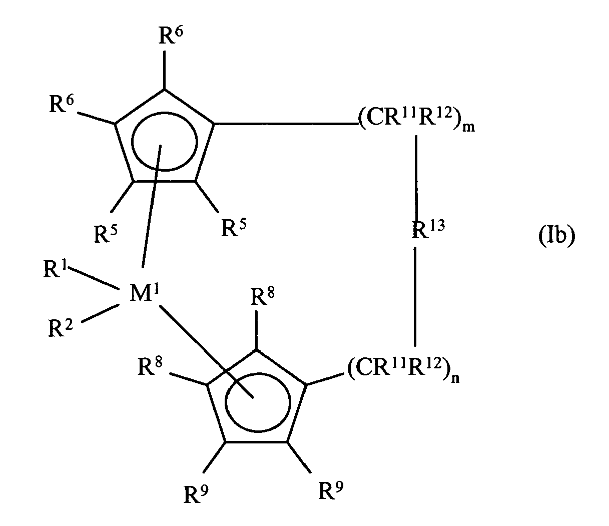 and the formula (Ic)

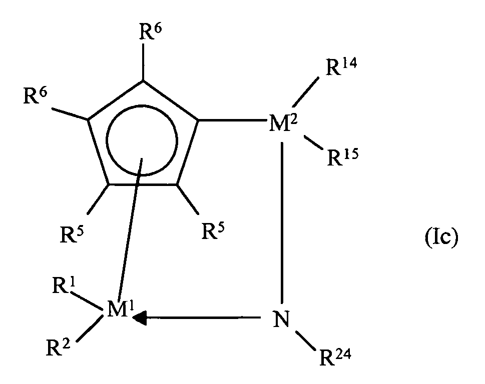

In the formulae (I), (Ia) and (Ib), M¹ is a metal of Group IVb, Vb or VIb of the Periodic Table, preferably titanium, zirconium, hafnium, vanadium, niobium, tantalum, chromium, molybdenum, tungsten, particularly preferably titanium, zirconium, hafnium.

R¹ and R² are identical or different and are each, independently of one another, a hydrogen atom, a C₁-C₁₀-, preferably C₁-C₃-alkyl group, in particular methyl, a C₁-C₁₀-, preferably C₁-C₃-alkoxy group, a C₆-C₁₀-, preferably C₆-C₈-aryl group, a C₆-C₁₀-, preferably C₆-C₈-aryloxy group, a C₂-C₁₀-, preferably C₂-C₄-alkenyl group, a C₇-C₄₀-, preferably C₇-C₁₀-arylalkyl group, a C₇-C₄₀-, preferably C₇-C₁₂-alkylaryl group, a C₈-C₄₀-, preferably C₈-C₁₂-arylalkenyl group or a halogen atom, preferably a chlorine atom.

R³ and R⁴ are identical or different and are each, independently of one another, a monocyclic or polycyclic hydrocarbon radical which together with the central atom M¹ can form a sandwich structure. R³ and R⁴ are preferably cyclopentadienyl, indenyl, tetrahydroindenyl, benzindenyl or fluorenyl, with the basic skeletons being able to bear additional substituents or be bridged to one another. In addition, one of the radicals R³ and R⁴ can be a substituted nitrogen atom, where R²⁴ has one of the meanings of R¹⁷ and is preferably methyl, tert-butyl or cyclohexyl.

R⁵, R⁶, R⁷, R⁸, R⁹ and R¹⁰ are identical or different and are each, independently of one another, a hydrogen atom, a halogen atom, preferably a fluorine, chlorine or bromine atom, a C₁-C₁₀-, preferably C₁-C₄-alkyl group, a C₆-C₁₀-, preferably C₆-C₈-aryl group, a C₁-C₁₀-, preferably C₁-C₃-alkoxy group, an -NR¹⁶₂, -SR¹⁶, -OSiR¹⁶₃, -SiR¹⁶₃ or -PR¹⁶₂ radical, where R¹⁶ is a C₁-C₁₀-, preferably C₁-C₃-alkyl group or a C₆-C₁₀-, preferably C₆-C₈-aryl group or in the case of Si- or P-containing radicals can also be a halogen atom, preferably a chlorine atom, or two adjacent radicals R⁵, R⁶, R⁷, R⁸, R⁹ or R¹⁰ together with the carbon atoms connecting them form a ring. Particularly preferred ligands are the substituted compounds of the basic skeletons cyclopentadienyl, indenyl, tetrahydroindenyl, benzindenyl or fluorenyl.

R¹³ is 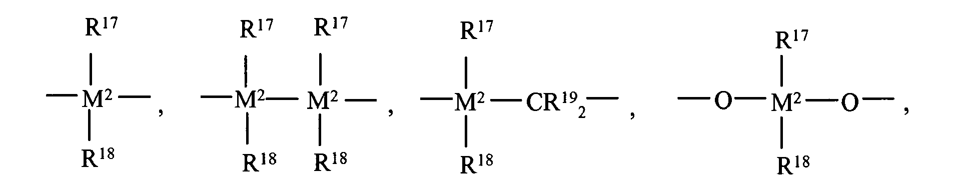 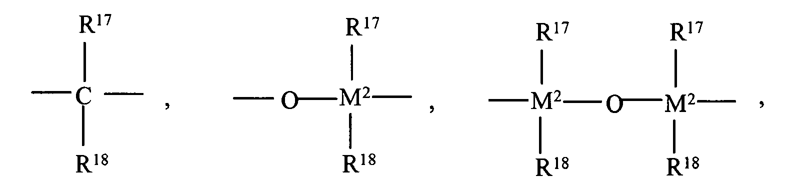 =BR¹⁷ =AlR¹⁷ -Ge-, -Sn-, -O-, -S-, =SO, =SO₂, =NR¹⁷, =CO, =PR¹⁷ or =P(O)R¹⁷, where R¹⁷, R¹⁸ and R¹⁹ are identical or different and are each, independently of one another, a hydrogen atom, a halogen atom, preferably a fluorine, chlorine or bromine atom, a C₁-C₃₀-, preferably C₁-C₄-alkyl group, in particular a methyl group, a C₁-C₁₀-fluoroalkyl group, preferably a CF₃ group, a C₆-C₁₀-fluoroaryl group, preferably a pentafluorophenyl group, a C₆-C₁₀-, preferably C₆-C₈-aryl group, a C₁-C₁₀₋, preferably C₁-C₄-alkoxy group, in particular a methoxy group, a C₂-C₁₀-, preferably C₂-C₄-alkenyl group, a C₇-C₄₀-, preferably C₇-C₁₀-aralkyl group, a C₈-C₄₀-, preferably C₈-C₁₂-arylalkenyl group or a C₇-C₄₀-, preferably C₇-C₁₂-alkylaryl group, or R¹⁷ and R¹⁸ or R¹⁷ and R¹⁹ together with the atoms connecting them form a ring.

M² is silicon, germanium or tin, preferably silicon or germanium.

R¹³ is preferably =CR¹⁷R¹⁸, =SiR¹⁷R¹⁸, = GeR¹⁷R¹⁸, -O-, -S-, =SO, =PR¹⁷ or =P(O)R¹⁷.

R¹¹ and R¹² are identical or different and independently have one of the meanings of R¹⁷.

m and n are identical or different and are each 0, 1 or 2, preferably 0 or 1, with m plus n being 0, 1 or 2, preferably 0 or 1.

R¹⁴ and R¹⁵ are identical or different and independently have one of the meanings of R¹⁷ and R¹⁸.

Preferred metallocenes are:
- bis(1,2,3-trimethylcyclopentadienyl)zirconium dichloride,
- bis(1,2,4-trimethylcyclopentadienyl)zirconium dichloride,
- bis(1,2-dimethylcyclopentadienyl)zirconium dichloride,
- bis(1,3-dimethylcyclopentadienyl)zirconium dichloride,
- bis(1-methylindenyl)zirconium dichloride,
- bis(1-n-butyl-3-methylcyclopentadienyl)zirconium dichloride,
- bis(2-methyl-4,6-di-i-propylindenyl)zirconium dichloride,
- bis(2-methylindenyl)zirconium dichloride,
- bis(4-methylindenyl)zirconium dichloride,
- bis(5-methylindenyl)zirconium dichloride,
- bis(alkylcyclopentadienyl)zirconium dichloride,
- bis(alkylindenyl)zirconium dichloride,
- bis(cyclopentadienyl)zirconium dichloride,
- bis(indenyl)zirconium dichloride,
- bis(methylcyclopentadienyl)zirconium dichloride,
- bis(n-butylcyclopentadienyl)zirconium dichloride,
- bis(octadecylcyclopentadienyl)zirconium dichloride,
- bis(pentamethylcyclopentadienyl)zirconium dichloride,
- bis(trimethylsilylcyclopentadienyl)zirconium dichloride,
- biscyclopentadienyldibenzylzirconium,
- biscyclopentadienyldimethylzirconium,
- bistetrahydroindenylzirconium dichloride,
- dimethylsilyl-9-fluorenylcyclopentadienylzirconium dichloride,
- dimethylsilylbis-1-(2,3,5-trimethylcyclopentadienyl)zirconium dichloride,
- dimethylsilylbis-1-(2,4-dimethylcyclopentadienyl)zirconium dichloride,
- dimethylsilylbis-1-(2-methyl-4,5-benzindenyl)zirconium dichloride,
- dimethylsilylbis-1-(2-methyl-4-ethylindenyl)zirconium dichloride,
- dimethylsilylbis-1-(2-methyl-4-i-propylindenyl)zirconium dichloride,
- dimethylsilylbis-1-(2-methyl-4-phenylindenyl)zirconium dichloride,
- dimethylsilylbis-1-(2-methylindenyl)zirconium dichloride,
- dimethylsilylbis-1-(2-methyltetrahydroindenyl)zirconium dichloride,
- dimethylsilylbis-1-indenylzirconium dichloride,
- dimethylsilylbis-1-indenyldimethylzirconium,
- dimethylsilylbis-1-tetrahydroindenylzirconium dichloride,
- diphenylmethylene-9-fluorenylcyclopentadienylzirconium dichloride,
- diphenylsilylbis-1-indenylzirconium dichloride,
- ethylenebis-1-(2-methyl-4,5-benzindenyl)zirconium dichloride,
- ethylenebis-1-(2-methyl-4-phenylindenyl)zirconium dichloride,
- ethylenebis-1-(2-methyltetrahydroindenyl)zirconium dichloride,
- ethylenebis-1-(4,7-dimethylindenyl)zirconium dichloride,
- ethylenebis-1-indenylzirconium dichloride,
- ethylenebis-1-tetrahydroindenylzirconium dichloride,
- indenylcyclopentadienylzirconium dichloride,
- isopropylidene(1-indenyl)(cyclopentadienyl)zirconium dichloride,
- isopropylidene(9-fluorenyl)(cyclopentadienyl)zirconium dichloride,
- phenylmethylsilylbis-1-(2-methylindenyl)zirconium dichloride,
and also the alkyl or aryl derivatives of these metallocene dichlorides.

To activate the single-site catalyst systems, suitable cocatalysts are used. Suitable cocatalysts for metallocenes of the formula (I) are organoaluminium compounds, in particular aluminoxanes, or aluminum-free systems such as R²⁰ₓNH₄₋ₓBR²¹₄, R²⁰ₓPH₄₋ₓBR²¹₄, R²⁰₃CBR²¹₄ or BR²¹₃. In these formulae, x is of from 1 to 4, the radicals R²⁰ are identical or different, preferably identical, and are each, independently of one another, C₁-C₁₀-alkyl or C₆-C₁₈-aryl or two radicals R²⁰ together with the atom connecting them form a ring and the radicals R²¹ are identical or different, preferably identical, and are each, independently of one another, C₆-C₁₈-aryl which may be substituted by alkyl, haloalkyl or fluorine. In particular, R²⁰ is ethyl, propyl, butyl or phenyl and R²¹ is phenyl, pentafluorophenyl, 3,5-bistrifluoromethylphenyl, mesityl, xylyl or tolyl.

In addition, a third component is frequently necessary in order to maintain protection against polar catalyst poisons. Organoaluminium compounds such as triethylaluminium, tributylaluminium and others, and also mixtures of these compounds, are suitable for this purpose.

Depending on the process, supported single-site catalysts can also be used. Preference is given to catalyst systems in which the residual contents of support material and cocatalyst do not exceed a concentration of 100 ppm in the product.

The propylene-olefin-copolymer waxes are known substances, they can be prepared according to EP 321 852 A1 or EP 384 264 A1.
Preferred propylene-olefin-copolymer waxes are propylene-ethylene-copolymer waxes prepared by copolymerization of propylene with ethylene using the metallocene catalyst dimethylsilylbisindenylzirconium dichloride by the process reported in EP 384 264 A, in particular in analogy to the method in Examples 1 to 16.

They are used in a finely particulate state, preferably sprayed or milled, or else in granular form.

Further preference is given to grafted propylene-olefin-copolymer waxes. Preferred grafted propylene-olefin-copolymer waxes are propylene-olefin-copolymer waxes modified with of from 0.5 to 10% by weight of maleic anhydride, the % by weight based on the sum of the weights of the starting materials propylene-olefin-copolymer wax and maleic anhydride. More preferably, the grafted propylene-olefin-copolymer waxes have been made with the metallocene catalyst.

Preferably, component A comprises 1, 2, 3, or 4, more preferably 1 or 2, even more preferably 1, propylene-olefin-copolymer waxes.

Montan wax is a vegetable fossil wax. It forms part of the extractable, bituminous components of lignite and peat.

Preferably, the montan wax is selected from the group consisting of montanic acids, montanic acid esters and soaps of montanic acids;
more preferably of montanic acids, montanic acid ethylene glycol esters, montanic acid glycerol esters, montanic acid pentaerythritol esters, calcium soaps containing montanic acid esters, calcium montanates and sodium montanates.

Preferably, the montan wax has a saponification number of from 70 to 165 mg KOH/g. More preferably, the montan wax is has a saponification number of from 125 to 165 mg KOH/g.

Further more preferably, the montan wax is a partially saponified montan wax with a saponification number of from 100 to 120 mg KOH/g.

Preferably the montan wax has a dropping point of from 50 to 120°C, more preferably of from 55 to 110°C.

Preferably, the viscosity of montan waxes is determined at 100°C for montan waxes with a dropping point below 90°C, or it is determined at 120°C for montan
waxes with a dropping point equal or greater than 90°C.

Preferably the montan wax has a viscosity of from 20 mPas at 100°C to 350 mPas at 100°C; or of from 20 mPas at 100°C to 350 mPas at 120°C.

Preferably the montan wax has an acid number of from 5 to 165 mg KOH/g.

More preferably, the montan wax is partially saponified and has an acid number of from 100 to 165.

Further more preferably, the montan wax is partially saponified and has an acid number of from 50 to 80.

Further more preferably, the montan wax is non- saponified and has an acid number of from 5 to 20, more preferably of from 5 to 15.

More preferably, montan waxes are characterized by a dropping point of from 50 to 120°C and by an acid number of from 5 to 165 mg KOH/g.

Amide waxes are preferably selected from the group consisting of C₁₆₋₁₈ fatty acid monoamides and C₁₆₋₁₈ fatty acid diamides, more preferably of C₁₆₋₁₈ fatty acid diamides, even more preferably of Bis(C₁₆₋₁₈ fatty acid)-ethylene diamides.
Preferably, the amide wax has a dropping point of from 80 to 150°C.
Preferably, the amide wax has a viscosity of from 5 to 15 mPas at 150°C.
Preferably, the amide wax has an acid number of from 1 to 10 mg KOH/g.
More preferably, amide waxes are characterized by a dropping point of from 80 to 150°C and by an acid number of from 1 to 10 mg KOH/g.

Especially, the amide wax is a bis stearoyl ethylene diamide or a oleic acid amide, more especially a bis stearoyl ethylene diamide, even more especially a bis stearoyl ethylene diamide with a dropping point of from 140 to 144°C and an acid number of from 5 to 7 and a viscosity of from 9 to 11 mPas at 150°C.

Preferably, the homopolymeric polyolefin wax consists of 1, 2, 3, 4 or 5, preferably of 1, 2 or 3, even more preferably of 1 or 2, polar and/or non-polar homopolymeric polyolefin waxes.

Possible catalysts, which can be used for the production of homopolymeric polyolefin waxes, are preferably Ziegler-Natta-catalysts and metallocene catalysts, e.g. those mentioned in Ullmann's Encyclopedia of Industrial Chemistry, Vol. A 28, Weinheim 1996, S. 151-152.

Homopolymeric polyolefin waxes can also be manufactured by thermal degradation of suitable high molecular weight homopolymeric polyolefin polymers.

Preferably, homopolymeric polyolefin waxes are waxes which have been prepared in the presence of metallocenes as catalyst. The special abilities of metallocene catalysts are used to synthesize homopolymeric polyolefin waxes with selective and completely new property profiles. The use of metallocene catalysts provides for special combinations of melting point, viscosity and molecular weight of a propylene-olefin-copolymer wax.

Preferred homopolymer polyolefin waxes are homopolymer polyethylene waxes, homopolymer polypropylene waxes or homopolymer waxes of C₄₋₃₀ 1-olefins.

Preferred homopolymer polyolefin waxes are polyethylene waxes made with a Ziegler-Natta catalysts, more preferably of non-polar nature.
Further preferred homopolymer polyolefin waxes are polyethylene waxes made by radical ethylene polymerization.
Further preferred are homopolymeric polyethylene or homopolymeric polypropylene waxes made by thermal degradation of high molecular homopolymeric polyethylene or homopolymeric polypropylene polymers.

Preferred metallocene homopolymer polyolefin waxes are selected from the group consisting of metallocene homopolymeric polyethylene waxes and of metallocene homopolymeric polypropylene waxes, more preferably metallocene homopolymeric polyethylene waxes.

Further preference is given to oxidized or grafted homopolymer polyolefin waxes. Preferred are oxidized homopolymeric polyethylene waxes, preferably with acid numbers between 5 and 30 mg KOH/g. Preferably, grafting is done with of from 0.5 to 10% by weight of maleic anhydride or acrylic acid, more preferably of maleic anhydride, the % by weight based on the sum of the weights of the starting materials homopolymer polyolefin wax and maleic anhydride or acrylic acid. More preferably, the grafting is done on metallocene homopolymeric polyethylene waxes, on metallocene homopolymeric polypropylene waxes or on Ziegler-Natta catalyzed homopolymeric polyethylene waxes.

Preferably, the metallocene homopolymer polyolefin waxes have a Mn of from 500 to 50000 g/mol, more preferably of from 1000 to 35000 g/mol, even more preferably of from 1100 to 25000 g/mol.
Preferably, the metallocene homopolymer polyolefin waxes have a Mw of from 1000 to 140000 g/mol, more preferably of from 1900 to 100000 g/mol, even more preferably of from 2100 to 70000 g/mol.
Preferably, the metallocene homopolymer polyolefin waxes have a Mw/Mn value of from 1.0 to 3.0, more preferably of from 1.5 to 2.9, even more preferably of from 1.7 to 2.8; especially of from 2.1 to 2.7; more especially of from 2.2 to 2.5.

The non-metallocene homopolymer polyolefin waxes preferably have a weight average molar mass Mw in the range of from 1000 to 20 000 g/mol and/or a number average molar mass Mn in the range of from 500 to 15 000 g/mol.

Preferably, component D comprises 1, 2, 3, or 4 different, more preferably 1, 2 or 3, even more preferably 1 or 2, different waxes, and even more preferably 1 wax.

Preferably, the metal of the metal salts of the C₁₀₋₂₀ -fatty acids in component F is derived from magnesium, calcium, zinc or sodium, more preferably from calcium or zinc.
Preferably, the fatty acid of the metal salts of the C₁₀₋₂₀ -fatty acids in component F is preferably lauric acid or stearic acid, more preferably stearic acid.
More preferably, component F is a calcium stearate or a zinc stearate.

Component F preferably contains 1, 2, 3, 4 or 5 salts of fatty acids, more preferably it contains 1 or 2, even more preferably 1 metal salt of a fatty acid.

Unless indicated otherwise, a mass-specific surface area is determined by Brunauer Emmet Teller (BET) adsorption measured using nitrogen in accordance with ASTM D3037; this surface area will hereinafter be referred to as BET surface area.

Preferably, the joint extrusion of the organic polymer OP and of the components A, D and F is done together with a further component B, the component B being preferably a plastic additive and being preferably selected from the group consisting of carbon nanotubes (CNT), carbon black (CB), graphite, colorants, fillers, antistatic agents, UV absorbers, hindered amine stabilizers (HAS), hindered amine light stabilizers (HALS), slip agents, antifogging agents, anticondensation agents, suspension stabilizers, flame retardants, antioxidants, blowing agents, nucleating agents, peroxides, lubricants, acid scavengers, processing aids, coupling agents, dispersants, and mixtures of these substances.

Preferably, the composition Z comprises as a further substance the component B.

Preferably,
- acid scavengers are preferably oxides such as magnesium oxide;
- antioxidants are preferably primary or secondary antioxidants;
- colorants are organic and inorganic dyes and pigments; as organic pigments, preference is given to using azo or diazo pigments, coated azo or diazo pigments or polycyclic pigments; preferred polycyclic pigments are diketopyrrolopyrrole, phthalocyanine, quinacridone, perylene, dioxazine, anthraquinone, thioindigo, diaryl or quinophthalone pigments; as inorganic pigments, preference is given to using metal oxides, mixed oxides, aluminium sulphates, chromates, metal powders, pearl-effect pigments (mica), luminous pigments, titanium oxides, cadmium-lead pigments, iron oxides, carbon black, silicates, nickel titanates, cobalt pigments or chromium oxides suitable for pigmentation;
- fillers are silica, zeolites, silicates, preferably aluminium silicates, sodium silicates or calcium silicates, chalk, talc or talcum;
- antistatic agents are glyceryl stearate, glyceryl monostearate, alkylamines, ethoxylated alkylamines, alkylsulphonates, glyceryl esters;
- dispersants are preferably polar acid esters of long-chain alcohols, in particular alkylsulphonates, neoalkoxytitanates, neoalkoxyzirconates, monoalkoxytitanates, monoalkoxyzirconates and especially sodium alkylsulphonate and here sodium C₁₀₋₁₈-alkylsulphonate.

More preferably, the component B is selected from the group consisting of CNTs, CBs, graphites, colorants, fillers, UV absorbers, hindered amine stabilizers (HAS), hindered amine light stabilizers (HALS), slip agents, flame retardants, antioxidants, blowing agents, nucleating agents, lubricants, acid scavengers, processing aids, dispersants, and mixtures of these substances, especially from the group consisting of CBs, graphites, fillers and flame retardants.

All CBs are intrinsic conductive, but CBs also have negative effects on the organic polymer OP, i.e. reduced mechanical properties. By the use of a special range of CB, the concentration of CB can be minimized, for the purposes of the invention these are conductive carbon blacks (CCBs). CCB have an oil absorption number in a specific range and a BET surface in a specific range, by which they are distinguished from conventional CBs.

Preferred CCB have an oil absorption number (OAN) measured in accordance with ASTM D2414 of from 80 to 500 ml/100 g.

Preferred non-conductive CB have an oil absorption number (OAN) measured in accordance with ASTM D2414 of from 50 to 75 ml/100 g

Preferred CCB have an oil absorption number (OAN) measured in accordance with ASTM D2414 of from 100 to 500 ml/100 g, particularly preferably of from 150 to 400 ml/100 g, in particular of from 170 to 350 ml/100 g.

Preferred CBs have a BET surface area of from 30 to 2000 m²/g, more preferably of from 50 to 1500 m²/g, even more preferably of from 60 to 1250 m²/g.
Preferred CCBs have a BET surface area of from 65 to 2000 m²/g.

CCBs can preferably be procured from the companies Cabot, Phelps Dodge, Timcal, Degussa and Akzo.

Preferably, 1, 2 or 3 more preferably 1 or 2, even more preferably 1, CBs are used.

Preferred CNTs are single-wall carbon nanotubes (SWCNTs) or multiwall carbon nanotubes (MWCNTs), with MWCNTs being preferred.

Preferred CNTs have a BET surface area of from 50 to 1000 m²/g, particularly preferably of from 200 to 600 m²/g, in particular of from 250 to 560 m²/g.

Preference is given to MWCNTs having a wall structure made up of from 2 to 50 carbon layers, in particular of from 3 to 15 carbon layers.

Preferred MWCNTs have an average external diameter (defined as the median of the number distribution) of from 1 to 500 nm, particularly preferably of from 2 to 100 nm, in particular of from 3 to 60 nm, especially of from 3 to 20 nm.

There are various techniques and processes for producing CNTs which differ in terms of different methods of production or different catalyst particles. This leads, inter alia, to a differing residual content of catalyst in the CNTs.

Preference is given to CNTs having a residual catalyst content of 20% by weight or less, particularly preferably 8% by weight or less, in particular 5% by weight or less, especially 3% by weight or less, with the % by weight being based in each case on the total weight of the CNTs.

Preference is given to CNTs as are disclosed in WO2006/050903 A and can be obtained by the process disclosed in this document. The disclosure of this document, in particular Claims 1 to 10 in which the technical features of the disclosed process for producing carbon nanotubes and the carbon nanotubes which can be obtained by this process are described, is therefore expressly incorporated by reference at this point.

Particular preference is therefore given to CNTs which can be obtained by decomposition of a gaseous hydrocarbon over a heterogeneous catalyst comprising Mn, Co and a support material, with Co and Mn being present in amounts of from 2 to 98 mol% based on the total content of active components in metallic form, and optionally additionally contains Mo; particular preference is also given to carbon nanotubes which have a principal diameter of from 3 nm to 150 nm and have been produced using this catalyst; where light hydrocarbons such as aliphatics and olefins, either individually or in admixture, are preferably employed as starting materials and the process is preferably carried out continuously or batchwise, based on the introduction of the catalyst and the discharge of the carbon nanotubes formed with the exhausted catalyst; and the catalyst is preferably introduced into the reaction space in a form in which the main catalytically active components are present as oxides, partially or fully reduced, or as hydroxide. Further details of this process may be found in the description of W02006/050903 A. In particular, these carbon nanotubes produced in this way surprisingly make it possible to produce compositions Z having a low viscosity and at the same time a high loading; the desired conductivities in the polyolefins can be set; and the surface resistance of the polyolefins is low.

Preference is given to using CNTs which are coated with polyolefins or ethylene-vinyl acetate copolymers. The coating is preferably applied by in-situ polymerization. Particular preference is given to MWCNTs coated with polyethylene and with polypropylene, in particular with polyethylene.

Preference is given to using CNTs which have been made easier to disperse by modification or activation of their surface. Particularly preferred surface treatments of the CNTs are by means of plasma or gamma radiation, with very particular preference being given to plasma-treated MWCNTs.

CNTs can preferably be procured from the companies Mitsui, Arkema, Nanocyl, Thomas Swan & Co Ltd., CNI and in particular Bayer Material Science AG.

Preferably, 1, 2 or 3 more preferably 1 or 2, even more preferably 1, CBs are used. Preferably, 1, 2 or 3 more preferably 1 or 2, even more preferably 1, CNTs are used.

Preferred graphites have an oil absorption of dibutyl phthalate (DBP) measured in accordance with DIN 53601 of from 30 to 300 g of DBP/100 g, particularly preferably of from 40 to 170 g of DBP/100 g, in particular of from 50 to 150 g of DBP/100 g.

Preferred graphites have a BET surface area of from 0.1 to 50 m²/g, particularly preferably of from 1 to 40 m²/g, in particular of from 1.5 to 30 m²/g.

It is possible to use both naturally occurring graphites and synthetically produced graphites.

Graphite can preferably be procured from the companies Timcal, SGL Carbon or Nationale de Graphite.

Preferably, 1, 2 or 3 more preferably 1 or 2, even more preferably 1, graphites are used.

Preferably, component B comprises 1, 2, 3, 4 or 5 more preferably 1, 2 or 3, even more preferably 1 or 2, plastic additives.

Preferably, the joint extrusion of the organic polymer OP and of the components A, D and F is done together with a further component P, the component P being an organic polymer.

Preferably, the composition Z comprises as a further substance the component P.

The component P and the organic polymer OP are identical or different and independently from each other preferably selected from the group consisting of thermoplastic polycondensates, styrene polymers, polyamides, polyesters, polycarbonates, polyacrylates, polyacrylate copolymers, polyacetals, polyadducts, polyolefins, polyolefin copolymers and mixtures of these substances.

The component P and the organic polymer OP are identical or different and independently from each other preferably selected from the group consisting of thermoplastic polycondensates, more preferably polyamides, polyesters and polycarbonates; even more preferably polycarbonate (PC), polybutylene terephthalate (PBT) and polyethylene terephthalate (PET).

The component P and the organic polymer OP are identical or different and independently from each other preferably selected from the group consisting of styrene polymers, more preferably polystyrene (PS), styrene-acrylonitrile copolymer (SAN), acrylonitrile-polybutadiene-styrene graft polymer (ABS) and styrene-ethylene-butadiene-styrene block copolymers (SEBS).

The component P and the organic polymer OP are identical or different and independently from each other preferably selected from the group consisting of polyamides, more preferably polyamide 46 (PA46, polyamide 6/6t (PA6/6T), polyamide 6 (PA6), polyamide 12 (PA12) and polyamide 6.6 (PA6.6).

The component P and the organic polymer OP are identical or different and independently from each other preferably selected from the group consisting of polyacrylates and polyacrylate copolymers, more preferably polymethyl methacrylate (PMMA) and copolymer of ethylene and methyl acrylate, even more preferably polymethyl methacrylate (PMMA).

The component P and the organic polymer OP are identical or different and independently from each other preferably selected from the group consisting of polyacetals, more preferably polyoxymethylene (POM).

The component P and the organic polymer OP are identical or different and independently from each other preferably selected from the group consisting of polyadducts, more preferably polyurethanes, even more preferably thermoplastic polyurethane elastomer (TPU).

The component P and the organic polymer OP are identical or different and independently from each other preferably selected from the group consisting of polyolefins and polyolefin copolymers.

More preferred polyolefins or polyolefin copolymers as component P or as organic polymer OP are selected from the group consisting of
- polyethylene (PE), preferably high density polyethylene (HDPE), medium density polyethylene (MDPE), low density polyethylene (LDPE), linear low density polyethylene (LLDPE), metallocene low density polyethylene (mLDPE) and metallocene linear low density polyethylene (mLLDPE),
- polypropylene (PP), preferably polypropylene homopolymer (PPH), polypropylene random copolymer (PP-R) and polypropylene block copolymers (PP-block-COPO),
- polyolefin plastomers, preferably polymers of 1-octene with ethylene, and
- PE copolymers, preferably ethylene-vinyl acetate copolymers (EVA), copolymers of ethylene and methyl acrylate (EMA), copolymers of ethylene and butyl acrylate (EBA), copolymers of ethylene and ethyl acrylate (EEA), cycloolefin copolymers (COC);
even more preferably from the group consisting of
- PE, preferably HDPE, LDPE and LLDPE,
- PP, preferably PPH, PP-R and PP-block-COPO,
- polyolefin plastomers, preferably polymers of 1-octene with ethylene, and
- PE copolymers, preferably EVA and EMA.

Especially, the component P and the organic polymer OP are identical or different and independently from each other selected from the group consisting of PC, PBT, PET, PS, SAN, ABS, SEBS, PA6 or PA6.6, PMMA, POM, TPU, PE, PP, polyolefin plastomers and PE copolymers.

More especially, the component P and the organic polymer OP are identical or different and independently from each other selected from the group consisting of PBT, PET, PS, ABS, SEBS, PA6 or PA6.6, TPU, PE, PP, and EVA.

Preferably, the organic polymer OP and the component P are of the same chemical class of polymers, more preferably, they are identical.

Powdercoating materials are prepared by extrusion in co-rotating twin-screw extruders or singlescrew kneading apparatus. Powdercoating materials are composed of binders, such as polyester resins, for example, which are crosslinked for example using epoxides, triglycidyl isocyanurate (TGIC), p-hydroxyalkylamine or blocked isocyanates (uretdiones); and further substances such as pigments and fillers and additives. Therefore the binder, i.e. the polymer, which is used in powder coating materials, has reactive groups which allow crosslinking of the binder to create the coating. This means, a reactive binder, i.e. a reactive polymer is used in powder coating materials. Preferably, the organic polymer OP is not a polymer which is used in powder coating materials.

The composition Z preferably contains and/or the joint extrusion of the organic polymer OP is preferably done with
of from 0.01 to 70 % by weight of component A,
of from 0.01 to 70 % by weight of component D,
of from 0.01 to 70 % by weight of component F,
of from 0 to 99.97 % by weight of at least one further substance, preferably of component B and/or P;
more preferably
of from 0.02 to 60 % by weight of component A,
of from 0.02 to 50 % by weight of component D,
of from 0.02 to 50 % by weight of component F,
of from 0 to 99.94 % by weight of at least one further substance, preferably of component B and/or P;
with each of the % by weight being based, in case of a composition Z, on the total weight of the composition Z,
or, in case of a joint extrusion of an organic polymer OP, on the total weight of the components A, D, F, the at least one further substance and the organic polymer OP; and preferably,
in case of a composition Z, with the weight percent of the components A, D, F and of the optional at least one further substance,
or, in case of a joint extrusion of an organic polymer OP, with the weight percent of the components A, D, F, of the optional at least one further substance and of the organic polymer OP,
always adding up to 100 %.

The at least one further substance preferably comprises 1, 2, 3, 4, 5 or 6, more preferably 1, 2, 3 or 4, even more preferably 1, 2 or 3, further substances.

When the composition Z is a masterbatch MB, the composition Z preferably contains
of from 2 to 60 % by weight of component A,
of from 5 to 50 % by weight of component D,
of from 0.5 to 50 % by weight of component F,
of from 0 to 92.5 % by weight of at least one further substance, preferably of component B and/or P,
more preferably
of from 2 to 60 % by weight of component A,
of from 5 to 35 % by weight of component D,
of from 1.5 to 40 % by weight of component F,
of from 0 to 91.5 % by weight of at least one further substance, preferably of component B and/or P,
even more preferably
of from 2 to 35 % by weight of component A,
of from 5 to 25 % by weight of component D,
of from 7.5 to 15 % by weight of component F,
of from 0 to 85.5 % by weight of at least one further substance, preferably of component B and/or P,
especially preferably
of from 10 to 35 % by weight of component A,
of from 5 to 25 % by weight of component D,
of from 7.5 to 15 % by weight of component F,
of from 0 to 77.5 % by weight of at least one further substance, preferably of component B and/or P,
with each of the % by weight being based on the total weight of the composition Z, and preferably with the weight percent of the components A, D, and F and of the optional at least one further substance always adding up to 100 %.

When the composition Z is a masterbatch MB and contains the component B, the composition Z preferably contains
of from 2 to 35 % by weight of component A,
of from 5 to 25 % by weight of component D,
of from 7.5 to 15 % by weight of component F,
of from 45 to 85.5 % by weight of at least one further substance, preferably of component B,
of from 0 to 85.5 % by weight, preferably 10 to 85.5 % by weight, of at least one further substance, preferably of component P,
more preferably
of from 10 to 35 % by weight of component A,
of from 5 to 25 % by weight of component D,
of from 7.5 to 15 % by weight of component F,
of from 25 to 77.5 % by weight of at least one further substance, preferably of component B,
of from 0 to 77.5 % by weight, preferably 10 to 77.5 % by weight, of at least one further substance, preferably of component P,
even more preferably
of from 10 to 35 % by weight of component A,
of from 5 to 25 % by weight of component D,
of from 7.5 to 15 % by weight of component F,
of from 45 to 77.5 % by weight of at least one further substance, preferably of component B,
of from 0 to 77.5 % by weight, preferably 10 to 77.5 % by weight, of at least one further substance, preferably of component P,
with each of the % by weight being based on the total weight of the composition Z, and preferably with the weight percent of the components A, D, and F and of the at least one further substance always adding up to 100 %.

Preferably, in case the composition Z is a compound CO, the composition Z preferably contains, or, in case of a joint extrusion of an organic polymer OP, the joint extrusion of the organic polymer OP is preferably done with
of from 0.01 to 30% by weight of component A,
of from 0.01 to 10% by weight of component D,
of from 0.01 to 5% by weight of component F, and
of from 0 to 99.97% by weight of at least one further substance, preferably of from 0 to 99.97 % by weight, more preferably of form 0 to 5 % by weight, even more preferably of from 0.5 to 2.5 by weight of component B;
and/or preferably of from 0 to 99.97 % by weight, preferably of from 50 to 99.97 % by weight, even more preferably of from 75 to 99.97 % by weight, especially preferably of from 90 to 99.97 % by weight, of component P;
more preferably
of from 0.03 to 30% by weight of component A,
of from 0.05 to 10% by weight of component D,
of from 0.02 to 4% by weight of component F, and
of from 0 to 99.9% by weight of at least one further substance, preferably of from 0 to 99.9 % by weight, more preferably of form 0 to 5 % by weight, even more preferably of from 0.5 to 2.5 by weight of component B; and/or preferably of from 0 to 99.9 % by weight, preferably of from 50 to 99.9 % by weight, even more preferably of from 75 to 99.9 % by weight,
especially preferably of from 90 to 99.9 % by weight, of component P; even more preferably
of from 0.03 to 5% by weight of component A,
of from 0.05 to 5% by weight of component D,
of from 0.02 to 2% by weight of component F, and
of from 0 to 99.9% by weight of at least one further substance, preferably of from 0 to 99.9 % by weight, more preferably of form 0 to 5 % by weight, even more preferably of from 0.5 to 2.5 by weight of component B; and/or preferably of from 0 to 99.9 % by weight, preferably of from 50 to 99.9 % by weight, even more preferably of from 75 to 99.9 % by weight,
especially preferably of from 90 to 99.9 % by weight, of component P; especially preferably
of from 0.03 to 1% by weight of component A,
of from 0.05 to 1.5% by weight of component D,
of from 0.02 to 1% by weight of component F, and
of from 0 to 99.9% by weight of at least one further substance, preferably of from 0 to 99.9 % by weight, more preferably of form 0 to 5 % by weight, even more preferably of from 0.5 to 2.5 by weight of component B; and/or preferably of from 0 to 99.9 % by weight, preferably of from 50 to 99.9 % by weight, even more preferably of from 75 to 99.9 % by weight,
especially preferably of from 90 to 99.9 % by weight, of component P; with each of the % by weight being based, in case of a composition Z, on the total weight of the composition Z,
or, in case of a joint extrusion of an organic polymer OP, on the total weight of the components A, D, F, the at least one further substance and the organic polymer OP; and preferably,
in case of a composition Z, with the weight percent of the components A, D, F and of the optional at least one further substance,
or, in case of a joint extrusion of an organic polymer OP, with the weight percent of the components A, D, F, of the optional at least one further substance and of the organic polymer OP,
always adding up to 100 %.

In the extrusion step, the components A, D and F and any further substances are physically mixed with the organic polymer OP. Preferably, the components A, D and F and optionally B and P are jointly extruded with the organic polymer OP in form of the composition Z.

Preferably, the joint extrusion is carried out at a temperature above the softening point and/or above the melting point of the organic polymer OP.

The extrusion step is preferably carried out at a temperature of from 80 to 330°C, more preferably of from 80 to 300°C, even more preferably of from 100 to 280°C.

The time of the extrusion step is preferably of from 2 sec to 1 h, particularly preferably of from 10 sec to 15 min.

The extrusion step is done preferably at a pressure of from atmospheric pressure to 500 bars, more preferably of from atmospheric pressure to 200 bars.

The component A, D and F and optional further substances, either separately or in form of a composition Z, may be premixed before the extrusion step with the organic polymer OP, or they may be added to the organic polymer OP into the extruder without prior premixing.

The extruders used in the extrusion step can be any extruder used in the plastic industry.

The composition Z is produced by physically mixing the components A, D and F and any further substances with one another.

The mixing of the components can occur in one step or in a plurality of steps.

As mixing apparatus for physical mixing, it is possible to use a mixing apparatus customary in the plastics industry, preferably an apparatus selected from the group consisting of extruders, kneaders, presses, mills, calendar, blenders and mixers.
When the composition Z is a masterbatch MB or a compound CO, the mixing apparatuses are preferably extruders, kneaders and/or blade mixers, ball mills, shot mills, Banbury mills, roll mills, calenders, mixers, planetary mixers, blenders.
When the composition Z is a masterbatch MB, the mixing apparatuses are preferably extruders, kneaders and/or blade mixers. When the composition Z is a compound CO, the mixing apparatuses are preferably extruders, presses and injection-moulding machines, particularly preferably extruders.

Mixing preferably occurs continuously or batchwise, more preferably continuously, in the case of a masterbatch MB preferably by extrusion, mixing, milling, calendering or kneading, even more preferably by extrusion, and in the case of a compound CO preferably by extrusion, calendering or injection moulding or pressing, particularly preferably by extrusion.

Mixing is preferably carried out at a temperature of from 0 to 330°C, more preferably of from 10 to 330°C, even more preferably of from 20 to 330°C, especially of from 80 to 300°C.

In the case of a masterbatch MB, mixing is preferably carried out at a temperature of from 80 to 200°C, particularly preferably of from 100 to 180°C, in particular of from 110 to 150°C;
in the case of a compound CO, mixing is preferably carried out at a temperature of from 80 to 330°C, more preferably of from 80 to 300°C, even more preferably of from 100 to 280°C.

The mixing time is preferably of from 5 sec to 36 h, more preferably 5 sec to 24 h, even more preferably of from 5 sec to 10 h.

The mixing time in the case of continuous mixing is preferably of from 5 sec to 1 h, particularly preferably of from 10 sec to 15 min.
The mixing time in the case of batchwise mixing is preferably of from 1 min to 36 h, more preferably of from 2 min to 24 h, in particular of from 2 min to 10 h, especially of from 2 min to 8 h, more especially of from 2 min to 5 h, even more especially of from 2 to 1 h, in particular of from 2 min to 15 min.

The mixing is done preferably at a pressure of from atmospheric pressure to 500 bars, more preferably of from atmospheric pressure to 200 bars.

The composition Z is used in form of a masterbatch MB for the production of a compound CO or for the production of profiles or articles made of organic polymers OPs, or the composition Z is used as a compound CO for the production of profiles or articles made of organic polymers OPs.

In the case of a compound CO, the components A, D and F are preferably mixed in the form of a masterbatch MB with the component P. Furthermore, a premix of the masterbatch MB with pelletized component P is preferably used for physical mixing.

The components A, D and F and the composition Z are preferably used for the production of articles, preferably shaped articles, and households' products, profiles and containers, made of one or more organic polymers OP, which comprise the components A, D and F.

The use of the components A, D and F and the compositions Z, both in the form of a masterbatch MB or in the form of a compound CO, surprisingly provide for a low viscosity during extrusion. This low viscosity during the extrusion step can be obtained even at high loading with additive in the composition Z. In particular, a loading of the masterbatch MB with up to 20% by weight, even up to 25% by weight, in many cases even up to 30% by weight and sometimes even more, of additive can be achieved, with the % by weight being based on the total weight of the masterbatch MB, without the viscosity becoming so poor that the masterbatch MB can no longer be produced and processed, or a masterbatch not being formed at all. The high additive content combined with a low viscosity during extrusion makes inexpensive introduction of additives into the organic polymer OP possible; also, the wear on the equipment such as the extruders or the moulds is minimized and rapid homogenization and uniform distribution of the additive is possible.

In the compositions Z, the additives are well dispersed and/or distributed in the masterbatch MB and/or in the compound CO and/or in the composition Z. The quality of dispersion and/or distribution is determined qualitatively by optical means on pressed (compression moulded) plates or films, e.g. with microtome slices. The flowability, the impact toughness, the heat distortion temperature (i.e. the temperature of deflection under load) and the tensile strength also satisfy the requirements. The viscosity or the flowability is determined in accordance with DIN ISO 1133 and expressed as the melt flow rate MFR, the impact toughness is determined in accordance with DIN EN ISO 179, the heat distortion temperature (i.e. the temperature of deflection under load) is determined in accordance with DIN EN ISO 75-1 and the tensile strength is determined in accordance with DIN EN ISO 527-1.

The process provides for reduced torque and/or pressure in the extruder during extrusion of the organic polymer OP. This allows the improved production of profiles and articles, and for the improved simultaneous incorporation of plastic additives during the production of profiles and articles. Preferably, the combination of the components A, D and F, preferably in form of a compositions Z, is used to reduce the torque and/or the pressure in the extruder during extrusion of an organic polymer OP.

Therefore, the combination of the components A, D and F, preferably in form of a composition Z, is used as processing aid in the extrusion of organic polymers OP for the production of articles and profiles made of processed organic polymers.

### Further test methods:

The product properties are determined by the following methods, unless indicated otherwise:
Determination of the molar masses and molar mass distribution, i.e. the Mw and the Mn values, is done by gel permeation chromatography (GPC) according to DIN 55672, but at a temperature of 135°C and in the solvent 1,2-dichlorobenzene, where the waxes are completely dissolved; for calibration commercially available PE standards are used.
Determination of the dropping point is carried out using an Ubbelohde dropping point instrument in accordance with DIN 51801/2 (°C).
Determination of the softening point is done by using ring/ball in accordance with DIN EN 1427 (°C). For the purpose of accuracy, if the softening point is given as an integer number in the description or in the claims, it stands for ".0 C", for example "130 C" stands for "130.0 C"; if not otherwise stated.
Determination of the viscosity of the waxes in accordance with DIN 53018 (mPa*s)
Determination of the density in accordance with ISO 1183 (g/cm³)
Determination of the bulk density by DIN EN ISO 60 (kg/m3)
Determination of the saponification number by ISO 3681 (mg KOH/g)
Determination of the acid number by ISO 2114 (mg KOH/g)
Determination of modulus of elasticity by DIN EN ISO 527-1 (MPa).
Determination of the content of vinyl acetate with Fourier-Transformations-IR-Spectroscopy (FTIR), for calibration commercially available EVA-Standards are used.
Determination of the metal content by atomic absorption spectroscopy (AAS), for calibration commercially available metal standards are used
Determination of the ash content by annealing residue at 900°C in a muffle furnace for 60min.
Determination of the d50 value by a Laser Diffraction Mastersizer 2000, Fa. Malvern. Sample preparation: a small amount (ca. of from 0.5 to 3 g) of the sample is suspended with ultrasonic treatment for 5 min in a solution of 0.5 ml Arkopal N 090, 3 drops of isopropanol and 20 ml of water.
Determination of the magnesium silicate content by X-ray diffraction (XRD) analysis.
Measurement method for melting point: differential scanning calorimetry (DSC) in accordance with ISO 3146.
The torque T [Nm] of the extruder and the melt pressure MP at the extruder head [bar] were read off on the machine display and are a measure of the viscosity or the flowability of the melt in the extruder.

### Examples

### Substances used:

Component A1: propylene-ethylene-copolymer waxes having an ethylene content of from 8 to 10 % by weight based on the total weight of the monomers, a Mn value of 6700 g/mol, a Mw value of 15500 g/mol, a Mw/Mn value of 2.3 and a density of from 0.86 to 0.89 g/cm³.
Component A2: propylene-ethylene-copolymer waxes having an ethylene content of from 10 to 12 % by weight based on the total weight of the monomers, a Mn value of 11200 g/mol, a Mw value of 25200 g/mol, a Mw/Mn value of 2.3 and a density of from 0.86 to 0.89 g/cm³.
Component B1: CB having an oil absorption number (OAN) of from 65-75 ml/100 g
Component B2: CB having a oil absorption of dibutyl phthalate (DBP) of from 110-120 ml/100 g and a BET surface area of from 30 to 50 m²/g.
Component B3: talc having a magnesium silicate content of 98% and a d50 value of 6 micrometer
Component B4: CB having an oil absorption number (OAN) of 320 ml/100 g and a BET surface area of > 700 m²/g.
Component D1: montanic ester wax, partly saponified, having a viscosity of from 280 to 340 mPa*s, measured at 120°C, a dropping point in the range of from 96 to 104°C, a density of from 0.99 to 1.04 g/cm³ (measured at 20°C), an acid number of from 9 to 14 mg KOH/g and a saponification number of from 108 to 115 mg KOH/g
Component D2: non-polar polyethylene wax homopolymers, produced using by Ziegler-Natta catalysts, having a viscosity of from 640 to 660 mPa*s, measured at 140°C, a dropping point in the range of from 117 to 122°C, a density of from 0.92 to 0.94 g/cm³ (measured at 20°C), an acid number of 0 mg KOH/g, a Mn value of 1800 g/mol, a Mw value of 5600 g/mol, a Mw/Mn value of 3.1 and a saponification number of 0 mg KOH/g.
Component D3: non-polar polyethylene wax homopolymers, produced using by Ziegler-Natta catalysts, having a viscosity of from 280 to 320 mPa*s, measured at 140°C, a dropping point of 125°C, a density of from 0.96 to 0.98 g/cm³ (measured at 20°C), an acid number of 0 mg KOH/g, a Mn value of 1600 g/mol, a Mw value of 4800 g/mol, a Mw/Mn value of 3.0 and a d50 value of from 7.0 to 9.8 micrometer.
Component D4: Bis(C₁₆₋₁₈ fatty acid)-ethylene diamide (amide wax) having a viscosity of from ca. 10 mPa*s, measured at 150°C, a dropping point of from ca. 142°C, a density of from ca. 1.0 g/cm³ (measured at 20°C), an acid number of from ca. 6 mg KOH/g.
Component D5: polypropylene homopolymer wax having a viscosity of from 1500 to 2000 mPa*s, measured at 170°C, a softening point of from 160 to 166°C, a Mn value of 7100 g/mol, a Mw value of 19300 g/mol, a Mw/Mn value of 2.7 and a density of from 0.88 to 0.92 g/cm³.
Component F1: calcium stearate having an ash content of 10% and a melting point of 155°C.
Component F2: zinc stearate having a metal content of 11 % and a melting point of 120°C.
Component P1: low density polyethylene (LDPE) having a density of 0,922 g/cm³, an MFR of 22 g/10min (measured at 190°C/2.16kg) and a modulus of elasticity of 180 MPa
Component P2: polyamide 6 having a density of 1.10 g/cm³; an MFR of 106 g/10min (measured at 275°C/5.0kg) and a modulus of elasticity of from 900 to 2800 MPa Component P3: ethylene-vinyl acetate copolymer (EVA) having a density of 0.952 g/cm^{3,} an MFR of 7g/10min (measured at 190°C/2.16kg) and a vinyl acetate content of 27.5% by weight based of the EVA.
Component P4: linear low density polyethylene (LLDPE) having a density of 0,90 g/cm³, an MFR of 1.0 g/10min (measured at 190°C/2.16kg) and a modulus of elasticity of 80MPa.
Component P5: polypropylene block copolymer (PP-block-COPO) having a density of 0.90 g/cm³ an MFR of 4g/10min and a modulus of elasticity of 1200MPa.

% by weight mentioned in the following are based on the total weight of the mixture or the article; parts are parts by weight; "ex" means example, "cpex" means comparative example; "T-Extr" shows the temperature of the extruder in °C; "L-B" means "loading of component B"; "L-D" means "loading of component D"; "L-F" means "loading of component F", wherein loading is the content of the component in % by weight, with the % by weight being based on the total weight of the composition; unless indicated otherwise.

### ex or cpex 1 to 6, 205 to 209 and 220 to 223

The various components in the examples are homogenized together on a twin-screw extruder, the respective masterbatches are obtained, details and results are given in table A and B.

| Table A | | | | | | | | | | | |
|---|---|---|---|---|---|---|---|---|---|---|---|
| ex | masterbatch | T-Extr | components used [parts] | | | | | | | | |
| | | [°C] | A1 | A2 | D1 | D5 | F1 | B1 | B2 | B3 | P1 |
| cpex1 | MB1 | 200-220 | --- | --- | 10 | --- | 10 | 40 | --- | --- | 40 |
| 2 | MB2 | 100-160 | 30 | --- | 11.7 | --- | 11.7 | 46.6 | --- | --- | --- |
| 3 | MB3 | 100-160 | --- | 30 | 11.7 | --- | 11.7 | 46.6 | --- | --- | --- |
| 4 | MB4 | 100-160 | 25 | --- | 12.5 | --- | 12.5 | 50 | --- | --- | --- |
| 5 | MB5 | 100-160 | 30 | --- | 5 | --- | 15 | 40 | --- | 10 | 30 |
| cpex6 | MB6 | 200-220 | --- | --- | 10 | --- | 10 | --- | 40 | --- | 40 |
| cpex205 | MB205 | 100-160 | --- | --- | 26.7 | --- | 26.7 | 46.6 | --- | --- | --- |
| cpex206 | MB206 | --- | 53.4 | --- | --- | --- | --- | 46.6 | --- | --- | --- |
| 207 | MB207 | 100-160 | 12.5 | --- | 12.5 | --- | 12.5 | 50 | --- | --- | 12.5 |
| 208 | MB208 | 200-220 | 2.5 | --- | 12.5 | 10.0 | 12.5 | 50 | --- | --- | 12.5 |
| 209 | MB209 | 100-160 | 17.0 | --- | 12.5 | 8.0 | 12.5 | 50 | --- | --- | --- |
| | | | | | | | | | | | |

| ex | masterbatch | T-Extr | components used [parts] | | | | | | | | |
|---|---|---|---|---|---|---|---|---|---|---|---|
| | | [°C] | A1 | D2 | D3 | D4 | | F1 | B1 | B4 | P1 |
| cpex220 | MB220 | --- | --- | --- | --- | 48 | | 2.0 | 50 | --- | --- |
| cpex221 | MB221 | 100-160 | 50 | --- | --- | --- | | --- | 50 | --- | --- |
| 222 | MB222 | 200-230 | 25 | --- | --- | 23 | | 2.0 | 50 | --- | --- |
| cpex223 | MB223 | 200-230 | --- | --- | --- | 18 | | 2.0 | 50 | --- | 30 |

| Table B | | | | |
|---|---|---|---|---|
| ex | | L-B | L-D | L-F |
| | Masterbatch | [% by weight] | [% by weight] | [% by weight] |
| cpex1 | MB1 | 40 | 10 | 10 |
| 2 | MB2 | 46.6 | 11.7 | 11.7 |
| 3 | MB3 | 46.6 | 11.7 | 11.7 |
| 4 | MB4 | 50 | 12.5 | 12.5 |
| 5 | MB5 | 50 | 10 | 10 |
| cpex6 | MB6 | 40 | 10 | 10 |
| cpex205 | MB205 | 46.6 | 26.7 | 26.7 |
| cpex206 | MB206 | 46.6 | --- | --- |
| 207 | MB207 | 50 | 12.5 | 12.5 |
| 208 | MB208 | 50 | 22.5 | 12.5 |
| 209 | MB209 | 50 | 20.5 | 12.5 |
| cpex220 | MB220 | 50 | 48 | 2.0 |
| cpex221 | MB221 | 50 | --- | --- |
| 222 | MB222 | 50 | 23 | 2.0 |
| cpex223 | MB223 | 50 | 18 | 2.0 |

| | | | | |
|---|---|---|---|---|
| cpex205, cpex 206, cpex220 and cpex 221 are not producible on common masterbatch equipment, because either the granules are brittle and the strand breaks easily, or no granules at all are obtained. A conventional premix was used instead. | | | | |

### ex or cpex 10 to 19 and 215 to 216

The various components in the examples are homogenized together on a twin-screw extruder, respective masterbatches are obtained, details and results are given in tables C and D.

The masterbatch 14 is very hard and difficult to distribute in the polymer.

| Table C | | | | | | | | | | |
|---|---|---|---|---|---|---|---|---|---|---|
| ex | masterbatch | T-Extr | components used [parts] | | | | | | | |
| | | [°C] | A1 | B4 | D2 | D3 | F2 | P5 | P3 | P4 |
| 10 | MB10 | 100 to 160 | 50 | 25 | 15 | 8.5 | 1.5 | --- | --- | --- |
| 11 | MB11 | 140 to 190 | 54 | 20 | 16 | 8.5 | 1.5 | --- | --- | --- |
| 12 | MB12 | 140 to 190 | 36.5 | 15 | 7.5 | 4 | 0.5 | --- | 36.5 | --- |
| 13 | MB13 | 140 to 190 | 6.5 | 15 | 7.5 | 4 | 0.5 | --- | 66.5 | --- |
| cpex14 | MB 14 | 200 to 230 | --- | 15 | --- | --- | --- | --- | 85 | --- |
| cpex15 | MB15 | 200 to 230 | --- | 25 | --- | --- | --- | --- | --- | 75 |
| cpex16 | MB16 | 200 to 230 | --- | 25 | 9.0 | 5.0 | 1.0 | --- | --- | 60 |
| 17 | MB17 | 200 to 230 | 7.5 | 25 | 9,0 | 5,0 | 1,0 | --- | --- | 52.5 |
| cpex18 | MB18 | 200 to 230 | 12.5 | 30 | --- | --- | --- | --- | --- | 57.5 |
| cpex19 | MB 19 | 220 to 230 | --- | 15 | --- | --- | --- | 85 | --- | --- |
| cpex215 | MB215 | 200 to 230 | --- | 25 | 16.5 | 5.0 | 1.0 | --- | --- | 52.5 |
| cpex216 | MB216 | 200 to 230 | 22.5 | 25 | --- | --- | --- | --- | --- | 52.5 |

| Table D | | | | |
|---|---|---|---|---|
| ex | | L-B | MFR parameters | MFR result |
| | masterbatch | [% by weight] | [°C/kg] | [g/10min] |
| 10 | MB10 | 25 | 190/10 | 16 |
| 11 | MB11 | 20 | 190/10 | >100 |
| 12 | MB12 | 15 | 190/10 | >100 |
| 13 | MB13 | 15 | 190/10 | 40 |
| cpex14 | MB14 | 15 | 190/10 | 8 |
| cpex15 | MB15 | 25 | 230/21.6 | 5.5 |
| cpex16 | MB 16 | 25 | 230/21.6 | 6.0 |
| 17 | MB17 | 25 | 230/21.6 | 8 |
| cpex18 | MB18 | 30 | 230/21.6 | 0.2 |
| cpex19 | MB19 | 15 | 230/21.6 | 69 |
| cpex215 | MB215 | 25 | 190/10 | 2.2 |
| cpex216 | MB216 | 25 | 190/10 | 3.1 |

### ex or cpex 21 to 26, 210 to 214, and 225 to 228

The components were premixed in a tumble mixer and further mixed and homogenized in a Brabender single-screw extruder having a mixing section, T-Extr was of form 285 to 290°C. An extruded strand with a round profile with a thickness of 8 mm was obtained by extrusion with a screw speed of 100 rpm through. Details and results are given in table E.

| Table E | | | | | | | | | | |
|---|---|---|---|---|---|---|---|---|---|---|
| Ex | components used [parts] | | | | | | | L-B | T | MP |
| | MB1 | MB2 | MB3 | MB4 | MB5 | MB6 | P2 | [% by weight] | [Nm] | [bar] |
| cpex21 | 2 | --- | --- | --- | --- | --- | 98 | 0.8 | 10.9 | 12 |
| 22 | --- | 1.7 | --- | --- | --- | --- | 98.3 | 0.8 | 4.1 | 8.5 |
| 23 | --- | --- | 1.7 | --- | --- | --- | 98.3 | 0.8 | 2.8 | 8.8 |
| 24 | --- | --- | --- | 1.5 | --- | --- | 98.5 | 0.8 | 3 | 8.6 |
| 25 | --- | --- | --- | --- | 1.7 | --- | 98.3 | 0.85 | 3.8 | 9.3 |
| cpex26 | --- | --- | --- | --- | --- | 2 | 98 | 0.8 | 10.8 | 13 |

| Ex | components used [parts] | | | | | | | L-B | T | MP |
|---|---|---|---|---|---|---|---|---|---|---|
| | MB 205 | MB 206 | MB 220 | MB 221 | MB 222 | MB 223 | P2 | [% by weight] | [Nm] | [bar] |
| cpex210 | 1.7 | --- | --- | --- | --- | --- | 98.3 | 0.8 | 16.0 | 10.2 |
| cpex211 | --- | 1.7 | --- | --- | --- | --- | 98.3 | 0.8 | 8.0 | 4.1 |
| cpex225 | --- | --- | 2.0 | --- | --- | --- | 98.0 | 1.0 | 11.0 | 5.9 |
| cpex226 | --- | --- | --- | 2.0 | --- | --- | 98.0 | 1.0 | 18.0 | 8.0 |
| 227 | --- | --- | --- | --- | 2.0 | --- | 98.0 | 1.0 | 13.0 | 6.9 |
| cpex228 | --- | --- | --- | --- | --- | 2.0 | 98.0 | 1.0 | 16 | 5.9 |

| Ex | components used [parts] | | | | | | | L-B | T | MP |
|---|---|---|---|---|---|---|---|---|---|---|
| | MB 207 | MB 208 | MB 209 | --- | --- | --- | P2 | [% by weight] | [Nm] | [bar] |
| 212 | 1.5 | --- | --- | --- | --- | --- | 98,5 | 0.75 | 8.0 | 1.5 |
| 213 | --- | 1.5 | --- | --- | --- | --- | 98,5 | 0.75 | 9.0 | 2.2 |
| 214 | --- | --- | 1.5 | --- | --- | --- | 98,5 | 0.75 | 7.0 | 1.3 |

| | | | | | | | | | | |
|---|---|---|---|---|---|---|---|---|---|---|
| Cpex21 and cpex26 show significantly higher T and MP. | | | | | | | | | | |

### ex or cpex 51 to 55, 63 to 65, 71 to 75 and 235 to 236

The components were premixed in a tumble mixer and further mixed and homogenized in a Brabender single-screw extruder having a mixing section, T-Extr was of form 130 to 150°C, a flat film with a thickness of 1 mm was obtained by extrusion through a flat film die, details and results are given in table F.

| Table F | | | | | | | | | |
|---|---|---|---|---|---|---|---|---|---|
| Ex | components used [parts] | | | | | | L-B | T | MP |
| | MB10 | MB11 | MB12 | MB13 | MB14 | P3 | [% by weight] | [Nm] | [bar] |
| 51 | 30 | --- | --- | --- | --- | 70 | 7.5 | --- | --- |
| 52 | --- | 37.5 | --- | --- | --- | 62.5 | 7.5 | 36 | 10.5 |
| 53 | --- | --- | 50 | --- | --- | 50 | 7.5 | 30 | 11 |
| 54 | --- | --- | --- | 50 | --- | 50 | 7.5 | 43 | 64 |
| cpex55 | --- | --- | --- | --- | 50 | 50 | 7.5 | 46 | 76 |
| | | | | | | | | | |
| 63 | --- | --- | 58.3 | --- | --- | 41.7 | 8.75 | 25 | 6 |
| 64 | --- | --- | --- | 58.3 | --- | 41.7 | 8.75 | 35 | 41 |
| cpex65 | --- | --- | --- | --- | 58.3 | 41.7 | 8.75 | 36 | 54 |
| | | | | | | | | | |
| 71 | 40 | --- | --- | --- | --- | 60 | 10.0 | 27 | 3.5 |
| 73 | --- | --- | 66.7 | --- | --- | 33.3 | 10.0 | --- | --- |
| 74 | --- | --- | --- | 66.7 | --- | 33.3 | 10.0 | 39 | 39 |
| cpex75 | --- | --- | --- | --- | 66.7 | 33.3 | 10.0 | 41 | 65 |
| | | | | | | | | | |

| Ex | components used [parts] | | | | | | L-B | T | MP |
|---|---|---|---|---|---|---|---|---|---|
| | MB215 | MB216 | | | | P3 | [% by weight] | [Nm] | [bar] |
| cpex235 | 40 | --- | --- | --- | --- | 60 | 10.0 | 46.0 | 64.0 |
| cpex236 | --- | 40 | --- | --- | --- | 60 | 10.0 | 47.0 | 63.0 |

### ex or cpex 81 to 84, 91 to 95

The components were premixed with the component P4 in a tumble mixer and mixed and homogenized in a Brabender single-screw extruder having a mixing section, T-Extr was of from 190 to 200°C, a flat film with a thickness of 1 mm was obtained by extrusion through a flat film die; details and results are given in table G.

| Table G | | | | | | | | |
|---|---|---|---|---|---|---|---|---|
| Ex | components used [parts] | | | | | L-B | T | MP |
| | MB15 | MB16 | MB17 | MB18 | P4 | [% by weight] | [Nm] | [bar] |
| cpex81 | 30 | --- | --- | --- | 70 | 7.5 | 64 | 70 |
| cpex82 | --- | 30 | --- | --- | 70 | 7.5 | 60 | 60 |
| 83 | --- | --- | 30 | --- | 70 | 7.5 | 60 | 57 |
| cpex84 | --- | --- | --- | 25 | 75 | 7.5 | 65 | 68 |
| | | | | | | | | |
| cpex91 | 40 | --- | --- | --- | 60 | 10 | 68 | 71 |
| 93 | --- | --- | 40 | --- | 60 | 10 | 60 | 60 |
| cpex94 | --- | --- | --- | 33.3 | 66.7 | 10 | 70 | 75 |

### ex or cpex 101, 102 and 103

The components were premixed in a tumble mixer and further mixed and homogenized in a Brabender single-screw extruder having a mixing section, T-Extr was of from 240 to 250°C; a flat film with a thickness of 1 mm was obtained by extrusion through a flat film die, details and results are given in table H.

| Table H | | | | | | | |
|---|---|---|---|---|---|---|---|
| Ex | components used [parts] | | | | L-B | T | MP |
| | MB10 | MB19 | MB4 | P5 | [% by weight] | [Nm] | [bar] |
| 101 | 20 | --- | --- | 80 | 5.0 | 17.1 | 20.8 |
| cpex 102 | --- | 33.3 | --- | 66.7 | 5.0 | 39 | 25 |
| 103 | --- | --- | 30 | 70 | 15 | 18 | 26.8 |

## Claims

1. Use of a combination of a component A, a component D and a component F, for the joint extrusion together with an organic polymer OP in the production of a profile or an article made of a processed organic polymer;
wherein
the component A is a propylene-olefin-copolymer wax;
the component D is a wax selected from the group consisting of
montan waxes,
amide waxes and
homopolymeric polyolefin waxes;
the component F being a metal salt of a C₁₀₋₂₀ -fatty acid;
with the propylene-olefin-copolymer wax being made of the monomers propylene and of from 0.1 to 50% by weight of at least one compound of formula (II), 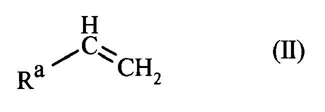 with R^{a} being selected from the group consisting of H and of unbranched or branched C₂₋₁₈ alkyl;
with the % by weight being based on the total weight of the monomers.

2. Use according to claim 1, wherein the amide wax is selected from the group consisting of C₁₆₋₁₈ fatty acid monoamides and C₁₆₋₁₈ fatty acid diamides.

3. Use according to claim 1 or 2, wherein the montan wax is selected from the group consisting of montanic acids, montanic acid esters and soaps of montanic acids.

4. Use according to one or more of claims 1 to 3, wherein the homopolymer polyolefin wax is a homopolymer polyethylene wax, a homopolymer polypropylene wax or a homopolymer wax of C₄₋₃₀ 1-olefins.

5. Use according to one or more of claims 1 to 4, wherein the metal of the metal salt of the C₁₀₋₂₀ -fatty acid in component F is derived from magnesium, calcium, zinc or sodium.

6. Use according to one or more of claims 1 to 5, wherein the fatty acid of the metal salt of the C₁₀₋₂₀ -fatty acid in component F is lauric acid or stearic acid.

7. Use according to one or more of claims 1 to 6, wherein the joint extrusion of the organic polymer OP and of the components A, D and F is done together with a further component B, the component B being selected from the group consisting of carbon nanotubes, carbon black, graphite, colorants, fillers, antistatic agents, UV absorbers, hindered amine stabilizers, hindered amine light stabilizers, slip agents, antifogging agents, anticondensation agents, suspension stabilizers, flame retardants, antioxidants, blowing agents, nucleating agents, peroxides, lubricants, acid scavengers, processing aids, coupling agents, dispersants, and mixtures of these substances.

8. Use according to one or more of claims 1 to 7, wherein the organic polymer OP is selected from the group consisting of thermoplastic polycondensates, styrene polymers, polyamides, polyesters, polycarbonates, polyacrylates, polyacrylate copolymers, polyacetals, polyadducts, polyolefins, polyolefin copolymers and mixtures of these substances.

9. Use according to one or more of claims 1 to 8, wherein the joint extrusion of the organic polymer OP and of the components A, D and F is done together with a further component P, the component P being an organic polymer.

10. Use according to claim 9, wherein the component P is identical or different from the component OP, and wherein the component P is independently from component OP selected from the same group of polymers as component OP is selected as defined in claim 8.

11. Use according to one or more of claims 1 to 10, wherein the joint extrusion of the organic polymer OP is done with
of from 0.01 to 70 % by weight of component A,
of from 0.01 to 70 % by weight of component D,
of from 0.01 to 70 % by weight of component F,
with each of the % by weight being based on the total weight of the components A, D, F and the organic polymer OP.

12. Articles, households' products, profiles and containers made of an organic polymer OP as defined in claim 9, comprising the component A, D and F.

## Patentansprüche

1. Verwendung einer Kombination einer Komponente A, einer Komponente D und einer Komponente F zur gemeinsamen Extrusion zusammen mit einem organischen Polymer OP bei der Herstellung eines Profils oder eines Gegenstands aus einem verarbeiteten organischen Polymer;
wobei
es sich bei der Komponente A um ein Propylen-Olefin-Copolymer-Wachs handelt;
es sich bei der Komponente D um ein Wachs aus der Gruppe bestehend aus
Montanwachsen,
Amidwachsen und
Polyolefinhomopolymerwachsen
handelt;
es sich bei der Komponente F um ein Metallsalz einer C₁₀₋₂₀-Fettsäure handelt;
wobei das Propylen-Olefin-Copolymer-Wachs aus den Monomeren Propylen und 0,1 bis 50 Gew.-% mindestens einer Verbindung der Formel II 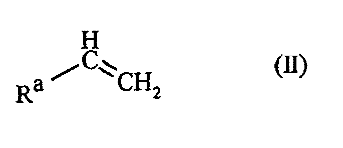 wobei R^{a} aus der Gruppe bestehend aus H und unverzweigtem oder verzweigtem C₂₋₁₈-Alkyl ausgewählt ist, hergestellt wird;
wobei sich die Gewichtsprozentangaben auf das Gesamtgewicht der Monomere beziehen.

2. Verwendung nach Anspruch 1, wobei das Amidwachs aus der Gruppe bestehend aus C₁₆₋₁₈-Fettsäuremonoamiden und C₁₆₋₁₈-Fettsäurediamiden ausgewählt ist.

3. Verwendung nach Anspruch 1 oder 2, wobei das Montanwachs aus der Gruppe bestehend aus Montansäuren, Montansäureestern und Seifen von Montansäuren ausgewählt ist.

4. Verwendung nach einem oder mehreren der Ansprüche 1 bis 3, wobei es sich bei dem Polyolefinhomopolymerwachs um ein Polyethylenhomopolymerwachs, ein Polypropylenhomopolymerwachs oder ein Homopolymerwachs von C₄₋₃₀-1-Olefinen handelt.

5. Verwendung nach einem oder mehreren der Ansprüche 1 bis 4, wobei sich das Metall des Metallsalzes der C₁₀₋₂₀-Fettsäure in Komponente F von Magnesium, Calcium, Zink oder Natrium ableitet.

6. Verwendung nach einem oder mehreren der Ansprüche 1 bis 5, wobei es sich bei der Fettsäure des Metallsalzes der C₁₀₋₂₀-Fettsäure in Komponente F um Laurinsäure oder Stearinsäure handelt.

7. Verwendung nach einem oder mehreren der Ansprüche 1 bis 6, wobei die gemeinsame Extrusion des organischen Polymers OP und der Komponenten A, D und F zusammen mit einer weiteren Komponente B erfolgt, wobei die Komponente B aus der Gruppe bestehend aus Kohlenstoffnanoröhren, Ruß, Graphit, Farbmitteln, Füllstoffen, Antistatika, UV-Absorbern, gehinderten Aminstabilisatoren, Lichtschutzmitteln vom Typ gehindertes Amin, Slipadditiven, Antischleiermitteln, Antikondensationsmitteln, Suspensionsstabilisatoren, Flammschutzmitteln, Antioxidantien, Treibmitteln, Nukleierungsmitteln, Peroxiden, Gleitmitteln, Säurefängern, Verarbeitungshilfsmitteln, Haftvermittlern, Dispergiermitteln und Mischungen dieser Substanzen ausgewählt ist.

8. Verwendung nach einem der Ansprüche 1 bis 7, wobei das organische Polymer OP aus der Gruppe bestehend aus thermoplastischen Polykondensaten, Styrolpolymeren, Polyamiden, Polyestern, Polycarbonaten, Polyacrylaten, Polyacrylatcopolymeren, Polyacetalen, Polyaddukten, Polyolefinen, Polyolefincopolymeren und Mischungen dieser Substanzen ausgewählt ist.

9. Verwendung nach einem der Ansprüche 1 bis 8, wobei die gemeinsame Extrusion des organischen Polymers OP und der Komponenten A, D und F zusammen mit einer weiteren Komponente P erfolgt, wobei es sich bei der Komponente P um ein organisches Polymer handelt.

10. Verwendung nach Anspruch 9, wobei die Komponente P mit der Komponente OP identisch oder davon verschieden ist und die Komponente P unabhängig von der Komponente OP aus der gleichen Gruppe von Polymeren wie Komponente OP gemäß Anspruch 8 ausgewählt ist.

11. Verwendung nach einem der Ansprüche 1 bis 10, wobei die gemeinsame Extrusion des organischen Polymers OP mit
0,01 bis 70 Gew.-% Komponente A,
0,01 bis 70 Gew.-% Komponente D,
0,01 bis 70 Gew.-% Komponente F
erfolgt, wobei sich die Gewichtsprozentangaben jeweils auf das Gesamtgewicht der Komponenten A, D und F und des organischen Polymers OP beziehen.

12. Gegenstände, Haushaltsprodukte, Profile und Behälter aus einem organischen Polymer OP gemäß Anspruch 9, umfassend die Komponenten A, D und F.

## Revendications

1. Utilisation d'une combinaison d'un composant A, un composant D et un composant F, pour l'extrusion commune conjointement avec un polymère organique OP dans la production d'un profilé ou un article constitué d'un polymère organique traité ;
dans laquelle
le composant A est une cire de copolymère propylène-oléfine ;
le composant D est une cire choisie dans le groupe constitué de
cires de montan,
cires d'amide et
cires de polyoléfine homopolymères ;
le composant F étant un sel de métal d'un acide gras en C₁₀₋₂₀ ;
la cire de copolymère propylène-oléfine étant constituée des monomères propylène et de 0,1 à 50 % en poids d'au moins un composé de formule (II), 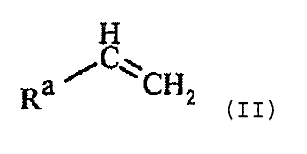 R^{a} étant choisi dans le groupe constitué de H et d'un alkyle en C₂₋₁₈ non ramifié ou ramifié ;
le % en poids étant basé sur le poids total des monomères.

2. Utilisation selon la revendication 1, dans laquelle la cire d'amide est choisie dans le groupe constitué de monoamides d'acide gras en C₁₆₋₁₈ et de diamides d'acide gras en C₁₆₋₁₈.

3. Utilisation selon la revendication 1 ou 2, dans laquelle la cire de montan est choisie dans le groupe constitué d'acides montaniques, d'esters d'acide montanique et de savons d'acides montaniques.

4. Utilisation selon une ou plusieurs des revendications 1 à 3, dans laquelle la cire de polyoléfine homopolymère est une cire de polyéthylène homopolymère, une cire de polypropylène homopolymère ou une cire homopolymère de 1-oléfines en C₄₋₃₀.

5. Utilisation selon une ou plusieurs des revendications 1 à 4, dans laquelle le métal du sel de métal de l'acide gras ensemble C₁₀₋₂₀ dans le composant F est dérivé du magnésium, du calcium, du zinc ou du sodium.

6. Utilisation selon une ou plusieurs des revendications 1 à 5, dans laquelle l'acide gras du sel de métal de l'acide gras en C₁₀₋₂₀ dans le composant F est l'acide laurique ou l'acide stéarique.

7. Utilisation selon une ou plusieurs des revendications 1 à 6, dans laquelle l'extrusion commune du polymère organique OP et des composants A, D et F est effectuée conjointement avec un autre composant B, le composant B étant choisi dans le groupe constitué de nanotubes de carbone, de noir de charbon, de graphite, de colorants, de charges, d'agents antistatiques, d'absorbants UV, de stabilisants à amine masquée, de stabilisants à la lumière à amine masquée, d'agents glissants, d'agents antibuée, d'agents anticondensation, de stabilisants de suspension, d'ignifugeants, d'antioxydants, d'agents d'expansion, d'agents de nucléation, de peroxydes, de lubrifiants, d'inactiveurs d'acide, d'adjuvants de traitement, d'agents de couplage, de dispersants, et de mélanges de ces substances.

8. Utilisation selon une ou plusieurs des revendications 1 à 7, dans laquelle le polymère organique OP est choisi dans le groupe constitué de polycondensats thermoplastiques, de polymères de styrène, de polyamides, de polyesters, de polycarbonates, de polyacrylates, de copolymères de polyacrylate, de polyacétals, de polyadducts, de polyoléfines, de copolymères de polyoléfine et de mélanges de ces substances.

9. Utilisation selon une ou plusieurs des revendications 1 à 8, dans laquelle l'extrusion commune du polymère organique OP et des composants A, D et F est effectuée conjointement avec un autre composant P, le composant P étant un polymère organique.

10. Utilisation selon la revendication 9, dans laquelle le composant P est identique à ou différent du composant OP, et où le composant P est indépendamment choisi parmi le composant OP choisi dans le même groupe de polymères dans lequel le composant OP est choisi tel que défini dans la revendication 8.

11. Utilisation selon une ou plusieurs des revendications 1 à 10, dans laquelle l'extrusion commune du polymère organique OP est effectuée avec de 0,01 à 70 % en poids de composant A,
de 0,01 à 70 % en poids de composant D,
de 0,01 à 70 % en poids de composant F,
chacun des % en poids étant basé sur le poids total des composants A, D, F et du polymère organique OP.

12. Articles, produits domestiques, profilés et conteneurs constitués d'un polymère organique OP tel que défini dans la revendication 9, comprenant les composants A, D et F.
